# EUROPEAN PATENT APPLICATION

(11) **EP 1 304 201 A1**
(43) Date of publication of application: **23.04.2003**
(21) Application number: 02023129.6
(22) Date of filing: 15.10.2002
(51) Int. Cl.: B29B 13/02, B29C 51/42

(54) **Plant for preheating porous thermoformable material and pressing method**

(30) Priority: 17.10.2001 IT MI20012149
(71) Applicant: Persico S.p.A., 24027 Nembro (BG) (IT)
(72) Inventor: Donizetti, Gaetano, 24128 Bergamo (IT)
(74) Representative: Faraggiana, Vittorio, Dr. Ing.

(57) **Abstract**

A heating plant (10) for thermoformable porously structured material (13) comprises a pair of superimposed plates (11,12) designed to receive between them the thermoformable material to be heated. The plates being relatively movable towards each other to mutually approach the material placed between them with each plate having surfaces in contact with the material which is pierced with one plate emitting (12) through the holes a heated air flow and the other plate (11) sucking the air flow through the holes. In this manner a hot air flow is established through the material placed between the plates to accomplish fast and thorough heating of the material in the entire mass to make it ready for pressing.

## Description

The present invention relates to a plant for preheating porous thermoformable materials designed to be hot pressed. The present invention also relates to a pressing method.

Thermoformable materials formed for example from cotton fiber or other felts contain fibers of thermoplastic materials which after melting become binders for other fibers are known. The pressing process for these materials calls for a first heating step in which melting of the thermoplastic material fibers is accomplished. In the following pressing step the material is taken between dies which impress their shape on the material. The dies are cold and take the temperature of the thermoplastic binder to below the melting point.

In presently used plants preheating of the material takes place either by placing the material between hot metal plates or by infrared rays. In both systems the heat is therefore directed onto the external surfaces of the material and internal heating takes place only by conduction. The materials subjected to heating are however essentially thermally insulating and the time necessary for correct heating of the entire mass is long, on the order of several minutes with material thickness of only 10mm. The production cycles obtainable are therefore relatively slow and do not fit in for example with the times required in the production of automobile components and the like.

Another problem of known preheating plants - hot plates or infrared - is the lack of uniformity in the temperature of the material heated. Indeed, the interior always remains cooler than the exterior. There is thus a tendency to apply to the exterior higher temperatures than necessary for melting thermoplastic material to seek to obtain sufficient heating at the core of the material. But sometimes the thermal decomposition temperature of the material is approached or exceeded and it is ruined.

The general purpose of the present invention is to remedy the above mentioned shortcomings by making available a pressing method and a thermoplastic material preheating plant allowing fast heating of the entire mass of material with simultaneous satisfactory temperature uniformity.

In view of this purpose it was sought to provide in accordance with the present invention a heating plant for thermoformable porously structured material comprising a pair of superimposed plates designed to receive between them the thermoformable material to be heated with the plates being relatively movable towards each other to approach the material placed between them with each plate which is pierced having surfaces in contact with the material and being connected with air flow sources, respectively a plate to emit through the holes a heated air flow and the other plate to suck a forced air flow through the material in such a manner as to establish a forced flow of hot air through the material placed between the plates.

Again in accordance with the present invention it was sought to realize a method for pressing thermoformable porous material comprising the steps of preheating the thermoformable material to the softening temperature its thermoplastic part by passing hot air through the material mass and then pressing the material thus heated.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagrammatic front elevation view of the plant in accordance with the present invention, and
FIG 2 shows a diagrammatic side elevation view of the plant partially cross sectioned along plane of cut II-II of FIG 1.

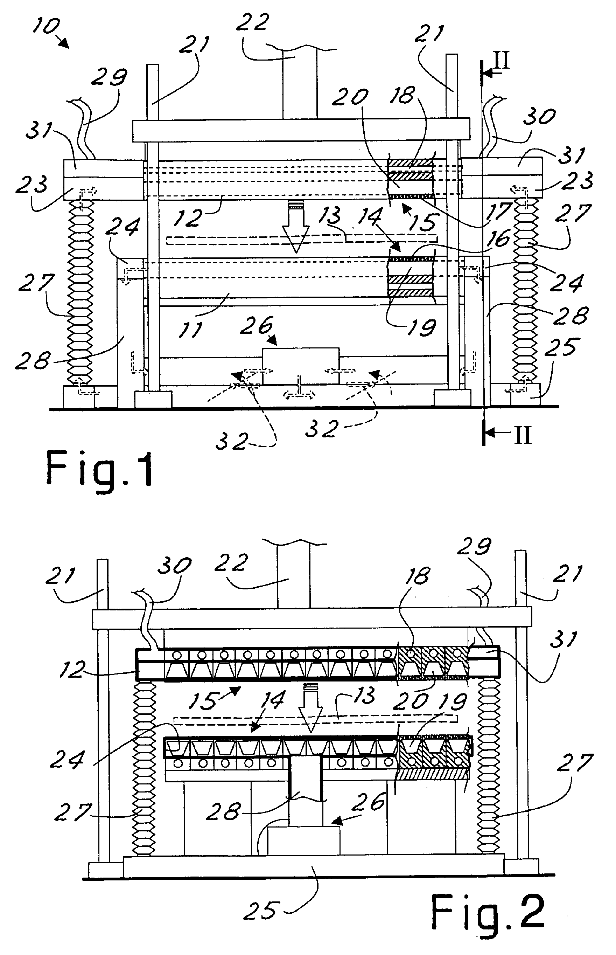

With reference to the figures, FIG 1 shows a plant designated as a whole by reference number 10 in accordance with the present invention for heating porous thermoformable materials. The plant 10 comprises two superimposed metal plates 11, 12 designed to receive between them the thermoformable material to be heated (designated as a whole by reference number 13) in the general form of a thick sheet.

The plates are movable towards each other to bring them near the material placed between them and enter into contact with its surface. It could be advantageous for the plates to slightly compress the material.

Each plate has surfaces 14, 15 in contact with the material which is pierced with holes 16, 17 and connected to air flow sources so that one plate emits through the holes a flow of heated air and the other plate sucks the air flow through the holes. There is thus produced a flow of hot air through the porous material placed between the plates.

Advantageously the holes in the plate are staggered with respect to the holes in the other plate so that the air flow is distributed in the thickness of the material to be heated and is directed in good part in the plane of the material.

As may be seen in FIG 2 for the upper plate, for heating the hot air flow at least one plate has ducts 18 for hot fluid (for example, diathermic oil) circulation heated by known heating means not shown.

In the advantageous embodiment shown each plate has in its thickness additional ducts 19, 20 which are parallel to the pierced surface of the plate and have side walls traversed by the holes 16, 17 for air passage.

The air ducts have advantageously a generally trapezoid cross section with the major base of the trapezoid arranged parallel to the pierced surface and traversed by the holes while the hot fluid circulation ducts (with round cross section) are arranged parallel to the air ducts and on the side opposite the pierced surface.

Again advantageously as seen in FIG 2 the plates can be realized with modular members side-by-side with each member containing at least one fluid duct and at least one of said other ducts for the air. In this manner realization of plates of different sizes is facilitated.

In addition, to have effective heat exchange the plates must be of high thermal conductivity material. It has been found advantageous to use extruded aluminum sections.

As may also be seen in FIG 1 the lower plate is fastened to the floor while the upper plate is movable along vertical guides 21 for the movement of approach to the lower plate by means of a known actuator 22.

The air ducts have ends flowing into box chambers 23, 24 arranged beside the plates to realize air distribution manifolds in the ducts. The box chambers 23 of the upper plate are connected by vertical tubing 27 of variable length and box chambers 25 to the delivery side of a blower 26 which provides the air flow source and is arranged below the fixed plate. The vertical tubing 27 can be as a bellows as shown in the figure and extensible telescopically or openable. The former solution is considered advantageous for better sealing of the outward flow.

The pump intake is connected to the side box chambers 24 on the lower plate by box ducts 28.

Advantageously inside the box are located movable baffles 32 (readily imaginable to those skilled in the art and therefore shown only diagrammatically) for intercepting, stopping and/or reversing the air flow between the plates.

To stop the air flow it is advantageous to connect the blower intake with a control directly to the delivery to cut off air circulation between the plates without shutting off the blower when the plates withdraw.

The whole air path is advantageously insulated thermally so as to prevent dispersion of heat and reduce power consumption which is virtually that necessary for heating the porous material.

The heating fluid ducts 18 are also interconnected at the ends by means of intake outlet box manifolds 31. The hot fluid is fed to the manifolds by means of flexible input-output ducts 29, 30.

The blower is sized in accordance with the resistance opposed to the air flow by the material to be heated. A value found advantageous for the pressure applied by the blower is between 1kPa an 10kPa depending on the internal aerodynamic resistance of the material. The flow rate of the blower is 1 m³ per sec per m² of material to be heated.

The sizing of the air channels 19, 20 is such that the pressure drop therein even if over a meter in length is negligible compared with the pressure drop in the holes 14, 15 which lead to the material to be heated. There is thus accomplished very homogeneous distribution of temperature in the material to be heated even with large sizes.

The air circulating in the system is heated in the passage through the ducts 19, 20 and the holes 14, 15 which lead to the material 13 as the ducts and holes are made in heated plates.

It is now clear that the predetermined purposes have been achieved by making available a plant allowing effective and homogeneous heating of porous thermoformable material before pressing.

The plant for preheating porous materials by hot air with a forced flow passing inside the material allows very fast and uniform heating. Indeed, heating of the material no longer takes place by heat conduction starting from the surface but by direct heating of every single fiber which is immersed in a fast flow of hot air. For example, in a felt 10 mm thick the speed of heating achievable is an order of magnitude greater than the velocity obtainable with conventional systems. Instead of heating the material in several minutes, only 15 to 20 seconds (temperature of 200°C) are needed. The material is also heated more homogeneously. There is no more overheating of the surface.

The temperature is the same in the entire thickness of the material. In pressing, by performing preheating in accordance with the present invention and then proceeding with the normal pressing of the heated material, very fast cycles and highly satisfactory results are achieved.

Naturally the above description of an embodiment applying the innovative principles of the present invention is given by way of non-limiting example of said principles within the scope of the exclusive right claimed here.

## Claims

1. Heating plant for thermoformable porously structured material comprising a pair of superimposed plates designed to receive between them the thermoformable material to be heated with the plates being relatively movable towards each other to approach the material placed between them with each plate having surfaces in contact with the material which is pierced and being connected with air flow sources, respectively a plate to emit through the holes a heated air flow and the other plate to suck an air flow through the holes in such a manner as to establish a flow of hot air through the holes in such a manner as to establish a hot air flow through the material placed between the plates.

2. Plant in accordance with claim 1 **characterized in that** to generate the hot air flow one plate is connected with the blower delivery and the other plate is connected with the blower suction with at least one plate having in its thickness ducts for hot heating-fluid circulation through the plate holes.

3. Plant in accordance with claim 2 **characterized in that** in its thickness the plate has other ducts parallel to the pierced surface of the plate with said ducts having a side wall traversed by said holes and at least one end connected to said blower.

4. Plant in accordance with claim 3 **characterized in that** said other ducts have generally trapezoid cross section with major base of the trapezoid arranged parallel to the pierced surface and traversed by the holes with the hot fluid circulation ducts being arranged parallel to said other ducts and on the side opposite the pierced surface.

5. Plant in accordance with claim 1 **characterized in that** one of said plates is fixed and the other is movable on command for the approach movement with the movable plate being connected to the air flow source by extensible, flexible or openable tubing.

6. Plant in accordance with claim 5 **characterized in that** the movable plate is arranged above the fixed plate and the air flow source is arranged below the fixed plate with the extensible tubing being arranged beside the plates and parallel to their direction of approach.

7. Plant in accordance with claim 5 **characterized in that** the plates are openable.

8. Plant in accordance with claims 3 and 6 **characterized in that** the ends of said other ducts of the upper plate are interconnected by a box chamber arranged beside the plate and into which lead the bellows ducts.

9. Plant in accordance with claim 1 **characterized in that** the holes in one plate are staggered with respect to the holes in the other plate.

10. Plant in accordance with claim 3 **characterized in that** the plates are realized with side-by-side modular members with each member containing at least one fluid duct and at least one of said other ducts being for air.

11. Plant in accordance with claim 5 **characterized in that** the extensible tubing is bellows tubing.

12. Plant in accordance with claim 2 **characterized in that** it comprises means which can be operated to intercept, stop and/or reverse the air flow between the plates on command.

13. Plant in accordance with claim 12 **characterized in that** to stop the air flow said means to be operated provide direct connection of the blower delivery with the blower suction.

14. Method for pressing thermoformable porously structured material comprising the steps of preheating the thermoformable material to the softening temperature of the thermoplastic part by means of a passage of hot air through the material mass and then pressing the material thus heated.
